(19) Europäisches Patentamt

European Patent Office

Office européen des brevets

(11) **EP 3 809 155 B1**

(12) **FASCICULE DE BREVET EUROPEEN**

(45) Date de publication et mention de la délivrance du brevet:
**03.04.2024   Bulletin 2024/14**

(21) Numéro de dépôt: **20201670.5**

(22) Date de dépôt: **14.10.2020**

(51) Classification Internationale des Brevets (IPC):
*G01S 7/48* [(2006.01)]   *G01S 13/931* [(2020.01)]
*G01S 17/89* [(2020.01)]   *G01S 17/931* [(2020.01)]
*G01S 15/931* [(2020.01)]   *G01S 7/295* [(2006.01)]
*G01S 7/53* [(2006.01)]   *G01S 13/89* [(2006.01)]
*G01S 15/89* [(2006.01)]

(52) Classification Coopérative des Brevets (CPC):
**G01S 17/931; G01S 7/4808; G01S 13/931; G01S 15/931; G01S 17/89;** G01S 7/295; G01S 7/53; G01S 13/89; G01S 15/89

(54) **PROCÉDÉ DE DÉTECTION D'OBSTACLE, DISPOSITIF DE DÉTECTION, SYSTÈME DE DÉTECTION ET VÉHICULE ASSOCIÉS**

HINDERNIS-ERKENNUNGSSYSTEM, ENTSPRECHENDE ERKENNUNGSVORRICHTUNG, ENTSPRECHENDES ERKENNUNGSSYSTEM UND FAHRZEUG

METHOD FOR DETECTING OBSTACLES, ASSOCIATED DETECTION DEVICE, DETECTION SYSTEM AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **16.10.2019   FR 1911555**

(43) Date de publication de la demande:
**21.04.2021   Bulletin 2021/16**

(73) Titulaire: **Commissariat à l'énergie atomique et aux énergies alternatives**
**75015 Paris (FR)**

(72) Inventeurs:
• **PEREIRA DA SILVA, Alex**
**38054 GRENOBLE CEDEX 09 (FR)**
• **LEIRENS, Sylvain**
**38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
• **YUAN SHUAI ET AL: "DSmT-Based Ultrasonic Detection Model for Estimating Indoor Environment Contour", IEEE TRANSACTIONS ON INSTRUMENTATION AND MEASUREMENT, IEEE SERVICE CENTER, PISCATAWAY, NJ, US, vol. 69, no. 7, 25 septembre 2019 (2019-09-25), pages 4002-4014, XP011791858, ISSN: 0018-9456, DOI: 10.1109/TIM.2019.2943715 [extrait le 2020-06-09]**
• **Sebastian Thrun: "Learning Occupancy Grid Maps with Forward Sensor Models", Autonomous Robots, 1 septembre 2003 (2003-09-01), pages 1-28, XP055335484, Boston DOI: 10.1023/A:1025584807625 Extrait de l'Internet: URL:http://faculty.iiit.ac.in/~mkrishna/ThrunOccGrid.pdf [extrait le 2020-06-24]**

EP 3 809 155 B1

**Description**

**DOMAINE TECHNIQUE**

La présente invention concerne un procédé de détection d'obstacle mis en oeuvre par ordinateur. L'invention concerne également dispositif de détection, un système de détection comprenant un tel dispositif de détection, et véhicule embarquant un tel système de détection.

L'invention s'applique au domaine de la télémétrie, en particulier à la détection d'obstacle(s) au moyen d'un télémètre.

**ÉTAT DE LA TECHNIQUE ANTÉRIEURE**

Il est connu d'équiper un véhicule d'au moins un télémètre pour déterminer la présence d'obstacle(s) dans un environnement autour du véhicule.

Le recours à un tel télémètre trouve son application dans la construction de cartes de probabilité de présence d'obstacle, pertinentes dans le domaine de la sécurité car permettant la détection d'obstacles, la prédiction de collision ou encore améliorant la sécurité des usagers vulnérables (piétons, vélos, etc.).

Plus précisément, il est connu d'élaborer une carte de probabilité de présence d'obstacle à partir de données de détection représentatives de la présence ou non d'un obstacle le long de chacun parmi des axes de détection associés au télémètre. Une telle carte représente non seulement la probabilité de présence d'obstacle le long de chaque axe de détection, mais également la probabilité de présence d'obstacle entre les axes de détection.

Néanmoins, les procédés de détection d'obstacle connus ne sont pas entièrement satisfaisants.

Or, la mise en oeuvre des procédés connus se traduit par une complexité de calcul élevée, notamment due à la mise en en oeuvre de grilles d'occupation nécessitant la détermination de la position des intersections entre chaque cellule de la grille d'occupation et les axes de détection.

En outre, la prise en compte des incertitudes sur la position et l'orientation du télémètre pour l'élaboration de la carte de probabilité de présence d'obstacle accroît davantage la complexité des calculs.

Un but de l'invention est donc de proposer un procédé de détection d'obstacle qui permette l'élaboration d'une carte de probabilité de présence avec une complexité de calcul réduite et une haute résolution, tout en prenant en compte les incertitudes de position et d'orientation du télémètre.

**EXPOSÉ DE L'INVENTION**

A cet effet, l'invention a pour objet un procédé de détection du type précité, comportant, pour au moins un télémètre présentant une pluralité d'axes de détection, à partir d'une position courante du télémètre, d'un modèle d'incertitude sur la position du télémètre et d'un signal de détection délivré par le télémètre, le signal de détection étant indicatif de la position, le long de chaque axe de détection, d'un horizon de détection correspondant, les étapes :

- calcul, pour chaque point d'un espace autour du télémètre, d'une pluralité de probabilités de présence intermédiaires correspondantes, chaque probabilité de présence intermédiaire étant associée à une orientation respective du télémètre parmi une pluralité d'orientations prédéterminées autour d'une orientation courante du télémètre, chaque orientation étant certaine ;
- pour chaque point de l'espace, calcul d'une probabilité de présence d'obstacle à partir de chaque probabilité de présence intermédiaire correspondante et d'un modèle d'incertitude sur l'orientation du télémètre ;
- génération d'une alerte si la probabilité de présence d'obstacle dans une zone prédéterminée par rapport au télémètre est supérieure ou égale à un seuil d'alerte prédéterminé.

En effet, par la mise en oeuvre d'un calcul des probabilités de présence intermédiaires, l'incertitude sur la mesure de l'orientation du télémètre n'étant pas prise en compte, puis du calcul de la probabilité de présence d'obstacle à partir des probabilités intermédiaires, la complexité de calcul est grandement réduite par rapport aux procédés de détection d'obstacle connus.

Aussi, le procédé objet de l'invention autorise une augmentation de la résolution de la carte de probabilité de présence d'obstacle par rapport aux procédés de détection d'obstacle connus, sans impact préjudiciable sur le temps de calcul requis pour établir une telle carte.

Suivant d'autres aspects avantageux de l'invention, le procédé de détection comporte une ou plusieurs des caractéristiques suivantes, prise(s) isolément ou suivant toutes les combinaisons techniquement possibles :

- pour un point donné quelconque de l'espace, la probabilité de présence d'obstacle est proportionnelle à une somme pondérée des probabilités intermédiaires correspondantes, un facteur de pondération associé à chaque probabilité intermédiaire étant égal à une probabilité de l'orientation correspondante ;

- pour un point donné quelconque de l'espace, la probabilité de présence d'obstacle est égale à :

$$P(x,y) = \frac{\sum_{l=-L}^{L} h(\beta_l) P^{\beta_l}(x,y)}{\sum_{l=-L}^{L} h(\beta_l)}$$

où $P(x, y)$ est la probabilité de présence d'obstacle au point de coordonnées $(x, y)$ ;

$\beta_l$ est la l-ème orientation du télémètre parmi $2L+1$ orientations prédéterminées autour de l'orientation courante ;

$h(\beta_l)$ est la probabilité que le télémètre présente l'orientation $\beta_l$ connaissant l'orientation courante ; et

$P^{\beta_l}(x,y)$ est la probabilité de présence intermédiaire au point de coordonnées $(x,y)$, pour l'orientation $\beta_l$ du télémètre ;

- le modèle d'incertitude sur l'orientation du télémètre met en oeuvre la loi de probabilité :

$$h(\beta) = \begin{cases} \dfrac{1}{\sigma_\beta \sqrt{2\pi}\; erf\left(\dfrac{\pi}{\sqrt{2}\sigma_\beta}\right)} \exp\left[-\dfrac{1}{2\sigma_\beta^2}\left(\beta-\mu_\beta\right)^2\right], & si\ {-}\pi \leq \beta < \pi \\ 0, & sinon \end{cases}$$

où $h(\beta)$ est la probabilité que le télémètre présente une orientation $\beta$ quelconque donnée ;

$\sigma_\beta$ est un écart-type d'une mesure de l'orientation du télémètre ;

$\mu_\beta$ est l'orientation courante du télémètre ;

« erf » est la fonction d'erreur ; et

« exp » est la fonction exponentielle ;

- les axes de détection sont issus d'un même point d'émission du télémètre, les axes de détection étant contenus dans un secteur angulaire de détection, le procédé comprenant l'estimation de la position de chaque point d'un front de détection défini dans le secteur angulaire de détection et interceptant chaque horizon de détection ;
- le procédé de détection met en oeuvre un modèle de détection de la forme :

$$f_i(r\,|\,\theta) = \begin{cases} u(r-d(\theta)+\tau) - \dfrac{1}{2}u(r-d(\theta)-\tau), & si\ d_i\ ou/et\ d_{i+1} < d_R-\tau \\ \dfrac{1}{2}u(r-d_R+\tau), & si\ d_i\ et\ d_{i+1} \geq d_R-\tau \end{cases}$$

où $f_i(r|\theta)$ est la probabilité de détecter un obstacle à une distance r et selon une coordonnée angulaire $\theta$ comprise entre des angles $\theta_i$ et $\theta_{i+1}$ associés à deux axes de détection successifs, la position et l'orientation du télémètre étant certaines ;

$d_i$, respectivement $d_{i+1}$, est la position, selon l'axe de détection associé à l'angle $\theta_i$, respectivement $\theta_{i+1}$, de l'horizon de détection correspondant ;

$d_R$ est la portée du télémètre ;

$\tau$ est l'incertitude sur la mesure, par le télémètre, de la position de l'horizon de détection ;

« u » la fonction échelon unité ; et

$d(\theta)$ est la position du front de détection pour la coordonnée angulaire $\theta$ ;

- la probabilité de présence intermédiaire à un point donné quelconque, pour une orientation donnée du télémètre, est évaluée à partir de l'expression :

$$P^\beta(x,y) = \sum_{i\in F_\geq} A_i(x,y) + \sum_{i\in F_<} B_i(x,y) + C(x,y)$$

où $P^\beta(x,y)$ est la probabilité de présence intermédiaire au point de coordonnées (x,y), pour l'orientation $\beta$ du télémètre ;

$F_\geq$ est l'ensemble des couples d'axes de détection successifs, associés respectivement aux angles $\theta_i$ et $\theta_{i+1}$, pour lesquels les positions des horizons de détection respectifs $d_i$ et $d_{i+1}$ sont simultanément supérieures ou égales à $d_R\text{-}\tau$ ;

$F_<$ est l'ensemble des couples d'axes de détection successifs, associés respectivement aux angles $\theta_i$ et $\theta_{i+1}$, pour lesquels la position de l'un au moins des horizons de détection respectifs $d_i$ et $d_{i+1}$ est strictement inférieure à $d_R\text{-}\tau$ ;

$A_i(x,y)$ est une grandeur définie comme :

$$A_i(x,y)=\frac{1}{4\pi\sigma^2}\int_{\theta_i}^{\theta_{i+1}} Y(x,y,r,\theta\,|\,d_R\text{-}\tau{\to}D)\,d\theta$$

$B_i(x,y)$ est une grandeur définie comme :

$$B_i(x,y)=\frac{1}{2\pi\sigma^2}\int_{\theta_i}^{\theta_{i+1}} \left( Y(x,y,r,\theta;\, d(\theta)\text{-}\tau{\to}d(\theta)+\tau) + \frac{1}{2}Y(x,y,r,\theta;\, d(\theta)+\tau{\to}D) \right) d\theta$$

$C(x,y)$ est une grandeur définie comme :

$$C(x,y)=\frac{1}{4\pi\sigma^2}\int_{\Gamma(\beta)} Y(x,y,r,\theta\,|\,0{\to}D)\,d\theta$$

où :

$$Y(x,y,r,\theta;\, \lambda{\to}\mu)=I_1(x,y,\mu,\theta)-I_1(x,y,\lambda,\theta)+I_2(x,y,\mu,\theta)-I_2(x,y,\lambda,\theta)$$

avec :

$$I_1(x,y,r,\theta)=-\sigma^2\exp\left\{-\frac{1}{2\sigma^2}\left[r^2+2rq(x,y,\theta)+w(x,y)\right]\right\}$$

et :

$$I_2(x,y,r,\theta)=-\frac{\sqrt{2\pi}}{2}\sigma q(x,y,\theta)\,\mathrm{erf}\left[\frac{r+q(x,y,\theta)}{\sqrt{2}\sigma}\right]\exp\left\{-\frac{1}{2\sigma^2}m(x,y,\theta)^2\right\}$$

$\sigma$ est un écart-type d'une mesure de la position du télémètre ;

D est une limite axiale prédéterminée ;

w(x, y) est une quantité valant $(x\text{-}\mu_x)^2 + (y\text{-}\mu_y)^2$

q(x, y, $\theta$) est une quantité valant $(x\text{-}\mu_x)\cos\theta + (y\text{-}\mu_y)\sin\theta$

m(x, y, $\theta$) est une quantité valant $(x\text{-}\mu_x)\sin\theta - (y\text{-}\mu_y)\cos\theta$

$(\mu_x, \mu_y)$ sont des coordonnées représentatives de la position courante du télémètre ; et

$\Gamma(\beta)$ est un secteur angulaire complémentaire d'un secteur angulaire de détection contenant les axes de détection du télémètre, le télémètre présentant l'orientation $\beta$ ;

- la limite axiale vaut :

$$D = \frac{\varepsilon}{2 \sin \frac{\Delta\theta}{2}}$$

où $\varepsilon$ est un écart maximal souhaité entre deux axes de détection consécutifs ;
$\Delta\theta$ est le plus grand angle entre deux axes de détection consécutifs.

En outre, l'invention a pour objet un produit programme d'ordinateur comprenant des instructions de code de programme qui, lorsqu'elles sont exécutées par un ordinateur, mettent en oeuvre le procédé de détection tel que défini ci-dessus.

L'invention a également pour objet un dispositif de détection d'obstacle configuré de façon à, pour au moins un télémètre présentant une pluralité d'axes de détection, à partir d'une position courante du télémètre, d'un modèle d'incertitude sur la position du télémètre et d'un signal de détection délivré par le télémètre, le signal de détection étant indicatif de la position, le long de chaque axe de détection, d'un horizon de détection correspondant :

- calculer, pour chaque point d'un espace autour du télémètre, une pluralité de probabilités de présence intermédiaires correspondantes, chaque probabilité de présence intermédiaire étant associée à une orientation respective du télémètre parmi une pluralité d'orientations prédéterminées autour d'une orientation courante du télémètre, chaque orientation étant certaine ;
- pour chaque point de l'espace, calculer une probabilité de présence d'obstacle à partir de chaque probabilité de présence intermédiaire correspondante et d'un modèle d'incertitude sur l'orientation du télémètre ;
- générer une alerte si la probabilité de présence d'obstacle dans une zone prédéterminée par rapport au télémètre est supérieure ou égale à un seuil d'alerte prédéterminé.

L'invention a également pour objet un système de détection comprenant un dispositif de détection d'obstacle tel que défini ci-dessus, un télémètre et un dispositif de navigation,

le télémètre étant associé à une pluralité d'axes de détection et étant configuré pour délivrer un signal de détection indicatif de la position, le long de chaque axe de détection, d'un horizon de détection correspondant,
le dispositif de navigation étant configuré pour déterminer la position courante et l'orientation courante du télémètre,
le dispositif de détection étant connecté au télémètre pour recevoir le signal de détection et au dispositif de navigation pour recevoir la position courante et l'orientation courante du télémètre.

L'invention a également pour objet un véhicule embarquant un système de détection d'obstacle tel que défini ci-dessus, les axes de détection du télémètre étant dirigés vers l'extérieur du véhicule.

**BRÈVE DESCRIPTION DES DESSINS**

L'invention sera mieux comprise à l'aide de la description qui va suivre, donnée uniquement à titre d'exemple non limitatif et faite en se référant aux dessins annexés sur lesquels :

[Fig. 1] la figure 1 est une représentation schématique d'un système de détection d'obstacle selon l'invention ;
[Fig. 2] la figure 2 est une représentation schématique illustrant les systèmes de coordonnées utilisé pour la mise en oeuvre, par le système de détection de la figure 1, du procédé de détection selon l'invention ;
[Fig. 3] la figure 3 est un graphe illustrant l'évolution d'un exemple de fonction de probabilité de présence d'obstacle en fonction de la distance par rapport à un télémètre du système de détection d'obstacle de la figure 1, avec un horizon de détection situé à une distance inférieure à une portée dudit système de détection d'obstacle ;
[Fig. 4] la figure 4 est similaire à la figure 3, l'horizon de détection étant situé à une distance égale à la portée du système de détection d'obstacle ;
[Fig. 5] la figure 5 est une vue de dessus d'une scène dans laquelle le système de détection d'obstacle de la figure 1 est mis en oeuvre ; et
[Fig. 6] la figure 6 est une carte de probabilité de présence d'obstacle obtenue pour la scène de la figure 5, dans un plan horizontal de la scène.

## DESCRIPTION DÉTAILLÉE

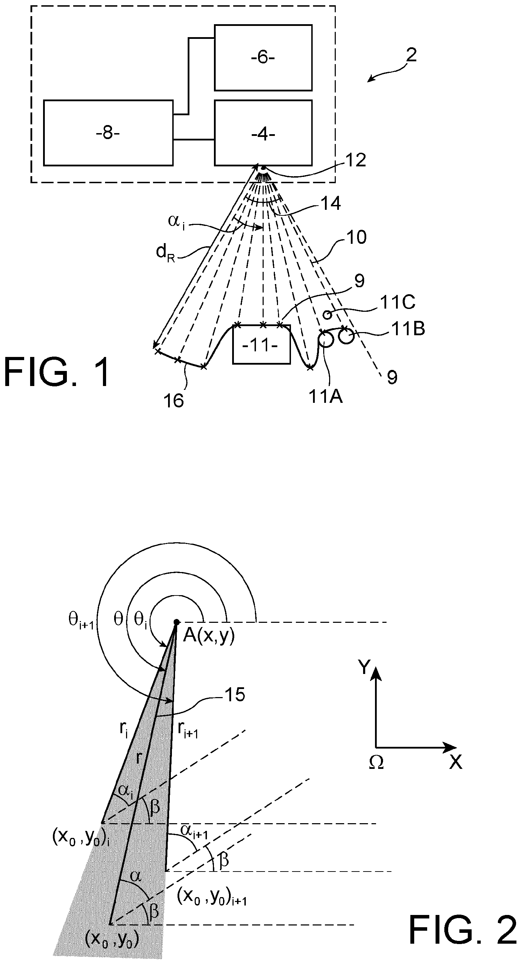

Un système 2 de détection d'obstacle selon l'invention est illustré par la figure 1.

Le système de détection 2 est destiné à être embarqué à bord d'un véhicule, par exemple une automobile.

Le système de détection 2 est configuré pour calculer, dans une scène donnée, une carte de probabilité de présence d'obstacle, par exemple dans au moins un plan de la scène.

Le système de détection 2 est également configuré pour générer une alerte dans le cas où la probabilité de présence d'obstacle dans une zone prédéterminée est supérieure ou égale à un seuil d'alerte prédéterminé.

La carte de probabilité de présence d'obstacle est une carte en deux ou trois dimensions. Dans l'exemple détaillé qui va suivre, la carte de probabilité de présence d'obstacle est une carte plane, contenue dans le plan $(X\Omega Y)$ tel qu'il apparaît sur la figure 2.

Comme cela apparaît sur la figure 1, le système de détection 2 comprend un télémètre 4, un dispositif de navigation 6 et un dispositif 8 de détection d'obstacle.

Le télémètre 4 est associé à une pluralité d'axes de détection 10 qui, dans le cas d'une application embarquée, sont dirigés vers l'extérieur du véhicule.

Au moins une partie des axes de détection 10 sont coplanaires, issus d'un même point d'émission 12 du télémètre 4 et sont contenus dans un secteur angulaire de détection 14. Par exemple tous les axes de détection 10 sont coplanaires.

L'ensemble des axes de détection 10 coplanaires et issus du même point d'émission 12 est également appelé « nappe ».

Chaque axe de détection 10 d'une même nappe est avantageusement identifié par un angle $\alpha_i$ correspondant, mesuré par rapport à une droite de référence prédéterminée, i étant un entier naturel compris entre 1 et N, N étant le nombre d'axes de détection 10 d'une même nappe. L'angle $\alpha_i$ est, par exemple, croissant avec la valeur de i.

En outre, le télémètre 4 est configuré pour émettre une onde d'interrogation suivant chaque axe de détection 10. Le télémètre 4 est également configuré pour délivrer un signal de détection indicatif de la position, le long de chaque axe de détection 10, d'un horizon de détection 9 correspondant détecté grâce à l'onde d'interrogation.

Par « position de l'horizon de détection » le long d'un axe de détection 10, il est entendu, au sens de la présente invention :

- dans le cas où un obstacle 11, propre à réfléchir et/ou rétrodiffuser au moins en partie l'onde d'interrogation, est présent sur le trajet de celle-ci à une distance inférieure à une portée $d_R$ du télémètre 4, la position de l'obstacle 11 le long de l'axe de détection 10 ; et
- en l'absence d'un tel obstacle, la position du point se trouvant, le long de l'axe de détection 10, à une distance égale à la portée du télémètre 4.

Sur la figure 1, pour chaque axe de détection 10, l'horizon de détection 9 correspondant est représenté par une croix.

Pour chaque axe de détection 10, identifié par son angle $\alpha_i$, la distance entre l'horizon de détection 9 correspondant et le point d'émission 12 est notée $d_i$.

Le télémètre 4 est classiquement connu. Le télémètre 4 est, par exemple, un dispositif LIDAR (acronyme de « LIght Détection And Ranging », pour détection par lumière et télémétrie), RADAR (acronyme de « RAdio Detection And Ranging », pour détection par ondes radio et télémétrie) ou encore SONAR (acronyme de « SOund Navigation and Ranging », pour navigation acoustique et télémétrie).

Dans le cas d'une application embarquée, le télémètre 4 est fixe par rapport au véhicule.

Le dispositif de navigation 6 est configuré pour déterminer la position courante et l'orientation courante du télémètre 4 dans un référentiel prédéterminé, par exemple le référentiel terrestre. Comme illustré par la figure 2, le référentiel prédéterminé est associé à un repère cartésien d'origine un point $\Omega$ et d'axes $(\Omega X)$ et $(\Omega Y)$.

Le dispositif de navigation 6 est classiquement connu. Par exemple, le dispositif de navigation 6 comprend un organe de positionnement par satellites (également désigné par le sigle anglais GNSS, pour « Global Navigation Satellite System »), configuré pour déterminer la position du télémètre, et une station inertielle de navigation, configurée pour déterminer l'orientation du télémètre.

Par « orientation du télémètre », il est entendu, au sens de la présente invention, l'orientation d'une droite fixe par rapport au télémètre 4 (par exemple, la droite de référence) dans le référentiel prédéterminé, c'est-à-dire un angle formé par la droite fixe et un axe donné du repère cartésien. De préférence, une telle droite est parallèle à une nappe d'axes de détection 10.

La position du télémètre 4 déterminée par le dispositif de navigation 6, dite « position courante », est notée $(\mu_x, \mu_y)$, dans le repère cartésien. En outre, dans ce repère, une position quelconque du télémètre est notée $(x_0, y_0)$.

L'orientation du télémètre 4 déterminée par le dispositif de navigation 6, dite « orientation courante », est notée

$\mu_\beta$. En outre, une orientation quelconque est notée $\beta$.

Chacune de la mesure de la position du télémètre 4 et de la mesure de l'orientation du télémètre 4 est entachée d'erreur. Un modèle pour l'erreur sur la mesure de position et un modèle pour l'erreur sur la mesure d'orientation seront décrits ultérieurement.

Le dispositif de détection 8 comprend, notamment, un calculateur pour la réalisation des calculs décrits ultérieurement. Le dispositif 8 est connecté au télémètre 4 pour recevoir le signal de détection, et au dispositif de navigation 6 pour recevoir la position courante et l'orientation courante du télémètre 4 déterminées par ledit dispositif de navigation 6.

Le dispositif de détection 8 est configuré pour calculer la carte de probabilité de présence d'obstacle à partir du signal de détection issu du télémètre 4 et des informations relatives à la position et l'orientation courantes du télémètre 4 fournies par le dispositif de navigation 6.

En particulier, le dispositif de détection 8 est configuré pour, dans un premier temps, calculer, pour chaque point d'un espace autour du télémètre 4, une pluralité de probabilités de présence intermédiaires correspondantes, et ce à partir de la position courante du télémètre 4, d'un modèle d'incertitude sur la position du télémètre 4 et du signal de détection.

Plus précisément, chaque probabilité de présence intermédiaire est associée à une orientation respective du télémètre 4 parmi une pluralité d'orientations prédéterminées autour de l'orientation courante du télémètre 4. Pour un tel calcul, chaque orientation prédéterminée est certaine, c'est-à-dire considérée comme non entachée d'erreur. Le recours à une telle pluralité d'orientations prédéterminées vise à tenir compte du fait que la mesure de l'orientation du télémètre 4, fournie par le dispositif de navigation 6, est incertaine. En d'autres termes, chacune des orientations prédéterminées autour de la position courante du télémètre 4, mesurée par le dispositif de navigation 6, est une orientation susceptible d'être effectivement adoptée par le télémètre 4. Une telle approche confère au procédé de détection d'obstacle selon l'invention une complexité moindre que celle des procédés classiques, comme cela sera montré ultérieurement.

En outre, le dispositif de détection 8 est configuré pour ensuite calculer, pour chaque point de l'espace, la probabilité de présence d'obstacle à partir de chaque probabilité de présence intermédiaire correspondante et d'un modèle d'incertitude sur l'orientation du télémètre 4.

Le dispositif de détection 8 est également configuré pour générer l'alerte précédemment décrite, lorsque la probabilité de présence d'obstacle dans une zone prédéterminée par rapport au télémètre 4 est supérieure ou égale au seuil d'alerte prédéterminé.

La figure 2 illustre un deuxième repère mis en oeuvre par le dispositif de détection 8 pour réaliser les calculs décrits précédemment. Un tel repère est un repère polaire, dont l'origine est un point A quelconque pour lequel la probabilité de présence d'obstacle doit être déterminée.

Les coordonnées du point A sont (x, y) dans le repère cartésien.

Dans un tel repère polaire, une droite 15 quelconque passant par le point A est identifiée par un angle $\theta$, qui vérifie la relation : $\theta = \alpha + \beta + 180°$, $\alpha$ étant l'angle entre la droite de référence liée au télémètre 4 et la droite 15, $\beta$ étant la valeur considérée de l'orientation du télémètre 4. En particulier, pour une orientation $\beta$ donnée quelconque, l'angle $\theta_i$ vaut $\alpha_i + \beta + 180°$.

Le modèle d'incertitude sur la position du télémètre 4 met en oeuvre une loi de probabilité s'exprimant, dans un tel repère, comme :

$$g(r,\theta\,|\,x,y) = \frac{1}{2\pi\sigma^2} \exp\left[-\frac{1}{2\sigma^2}\left(\left(x + r\cos\theta - \mu_x\right)^2 + \left(y + r\sin\theta - \mu_y\right)^2\right)\right]$$

où $g(r,\theta|x,y)$ est la probabilité que le télémètre présente une position quelconque donnée par les coordonnées polaires $(r,\theta)$ dans le repère polaire centré sur le point A de coordonnées (x, y) ;

$\sigma$ est un écart-type de la mesure de position du télémètre 4 ; et

« exp » est la fonction exponentielle.

En outre, le modèle d'incertitude sur l'orientation du télémètre 4 met en oeuvre la loi de probabilité :

$$h(\beta) = \begin{cases} \dfrac{1}{\sigma_\beta\sqrt{2\pi}\ \mathrm{erf}\left(\dfrac{\pi}{\sqrt{2}\sigma_\beta}\right)} \exp\left[-\dfrac{1}{2\sigma_\beta^2}\left(\beta - \mu_\beta\right)^2\right], \ \mathrm{si}\ \text{-}\pi \leq \beta < \pi \\ \\ 0, \ \mathrm{sinon} \end{cases}$$

où h(β) est la probabilité que le télémètre présente une orientation β quelconque donnée ;

$\alpha_\beta$ est un écart-type de la mesure de l'orientation du télémètre 4 ; et

« erf » est la fonction d'erreur.

Pour le calcul des probabilités intermédiaires, le dispositif de détection 8 est configuré pour estimer la position de chaque point d'un front de détection 16, illustré par la figure 1 et défini dans le secteur angulaire de détection 14 et interceptant chaque horizon de détection 9.

Notamment, le dispositif de détection 8 est configuré pour déterminer la position du front de détection 16 au moyen d'une interpolation, par exemple une interpolation linéaire ou une interpolation polynomiale.

De préférence, la position d(θ) d'un point quelconque du front de détection 16, identifié par son angle θ, est donnée par l'expression générale :

$$d(\theta) = \sum_{i=1}^{N-1} d^{(i)}(\theta) \chi_{\Theta_i}(\theta)$$

où $\chi_{\Theta_i}(\theta)$ est un fonction indicatrice définie comme :

$$\chi_{\Theta_i}(\theta) = \begin{cases} 1, \text{ si } \theta \in \Theta_i \\ 0, \text{ si } \theta \notin \Theta_i \end{cases}$$

$\Theta_i$ est un intervalle angulaire défini comme :

$$\Theta_i = \{\theta : \theta_i \leq \theta < \theta_{i+1}\}, i = 1, ..., N-2, \text{ et } \Theta_{N-1} = \{\theta : \theta_{N-1} \leq \theta \leq \theta_N\} ;$$

et

$d^{(i)}(\theta)$ est la fonction d'interpolation entre les position des deux horizons de détection 9 associés respectivement aux bornes de l'intervalle angulaire $\Theta_i$. En d'autres termes, $d^{(i)}(\theta)$ est la fonction d'interpolation entre les position des horizons de détection 9 associés respectivement aux axes de détection 10 identifiés par les angles $\theta_i$ et $\theta_{i+1}$.

Par exemple, dans le cas d'une interpolation linéaire, la fonction d'interpolation $d^{(i)}(\theta)$ s'exprime comme :

$$d^{(i)}(\theta) = \frac{(\theta_{i+1} - \theta) d_i + (\theta - \theta_i) d_{i+1}}{\theta_{i+1} - \theta_i}$$

Le dispositif de détection 8 est également configuré pour calculer chaque probabilité intermédiaire en mettant en oeuvre un modèle de détection présentant, de préférence, la forme :

$$f_i(r|\theta) = \begin{cases} u(r - d(\theta) + \tau) - \dfrac{1}{2} u(r - d(\theta) - \tau), \text{ si } d_i \text{ ou/et } d_{i+1} < d_R - \tau \\ \dfrac{1}{2} u(r - d_R + \tau), \text{ si } d_i \text{ et } d_{i+1} \geq d_R - \tau \end{cases}$$

où i est compris entre 1 et N-1 ;

$f_i(r|\theta)$ est la probabilité de détecter un obstacle à une distance r et selon un angle θ compris entre les angles $\theta_i$ et $\theta_{i+1}$ ;

$d_i$, respectivement $d_{i+1}$, est la position, selon l'axe de détection associé à l'angle $\theta_i$, respectivement $\theta_{i+1}$, de l'horizon de détection correspondant ;

$d_R$ est la portée du télémètre ;

$\tau$ est l'incertitude sur la mesure, par le télémètre, de la position de l'horizon de détection ; et

« u » est la fonction échelon unité.

Dans un tel modèle de détection, la position et l'orientation du télémètre 4 sont considérées comme certaines.

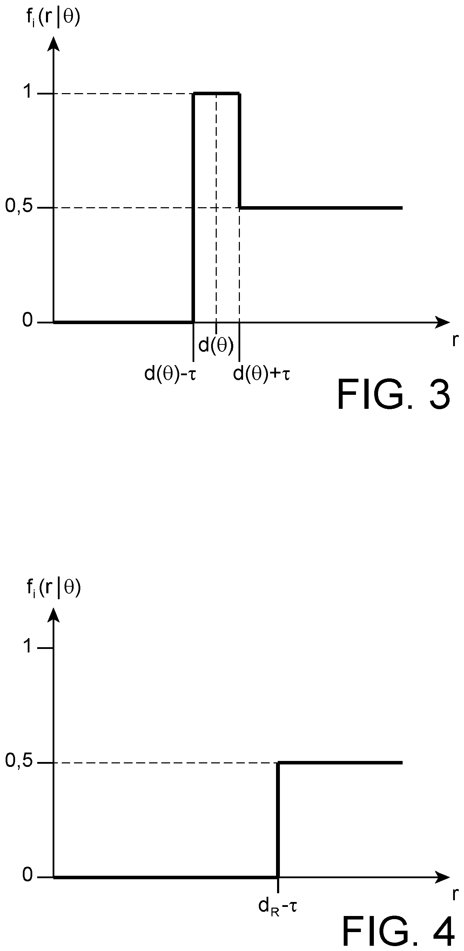

Une première mise en oeuvre du modèle de détection est illustrée par la figure 3.

Dans cet exemple, est considérée une droite 15 quelconque (voir figure 2) passant par le point de coordonnées (x, y) et identifiée par un angle θ compris entre deux angles successifs quelconques $θ_i$ et $θ_{i+1}$ associés à des axes de détection 10 du télémètre 4.

Pour cette droite 15, le front de détection 16 se situe à une distance d(θ) inférieure à la distance $d_R$-τ. En outre, au moins une parmi la position $d_i$ de l'horizon de détection 9 pour l'angle $θ_i$ et la position $d_{i+1}$ de l'horizon de détection 9 pour l'angle $θ_{i+1}$ est strictement inférieure à la distance $d_R$-τ.

Dans ce cas, le long de la droite 15, la probabilité d'occupation est :

- nulle (ou fixée à une valeur très petite devant 1) pour les valeurs de r strictement inférieures à la position d(θ)-τ ;
- égale à 1 (ou très proche de 1), au niveau du front de détection 16, c'est-à-dire entre d(θ)-τ et d(θ)+τ ; et
- égale à 0,5 au-delà du front de détection 16, c'est-à-dire à partir de la position d(θ)+τ le long de la droite 15.

Une deuxième mise en oeuvre du modèle de détection est illustrée par la figure 4.

Cet exemple diffère de l'exemple de la figure 3 uniquement en ce que le front de détection 16 se situe à une distance d(θ) supérieure ou égale à la distance $d_R$-τ.

Dans ce cas, le long de la droite 15, la probabilité d'occupation est :

- nulle (ou fixée à une valeur très petite devant 1) pour les valeurs de r strictement inférieures à la position $d_R$-τ ; et
- égale à 0,5 au-delà de la portée du télémètre 4, c'est-à-dire à partir de la position $d_R$-τ le long de la droite 15.

Il ressort de ce qui précède que la valeur « 0,5 » traduit une région inconnue, par exemple une région située derrière un obstacle.

Une situation similaire à celle de la figure 4 se produit également lorsque, pour une droite 15 associée à un angle θ compris entre $θ_i$ et $θ_{i+1}$, la position $d_i$ de l'horizon de détection 9 pour l'angle $θ_i$ et la position $d_{i+1}$ de l'horizon de détection 9 pour l'angle $θ_{i+1}$ sont simultanément supérieures ou égales à la distance $d_R$-τ.

Le dispositif de détection 8 est également configuré pour calculer, pour un point de coordonnées (x, y) quelconque donné, et pour une orientation β quelconque donnée (en particulier, une orientation β quelconque parmi 2L+1 orientations centrées autour de $μ_β$), la probabilité de présence intermédiaire à partir de l'expression (1) :

$$P^β(x,y) = \sum_{i \in F_≥} A_i(x,y) + \sum_{i \in F_<} B_i(x,y) + C(x,y) \qquad (1)$$

où $P^β(x,y)$ est la probabilité de présence intermédiaire au point de coordonnées (x, y), pour l'orientation β du télémètre ;

$F_≥$ est l'ensemble des couples d'axes de détection 10 successifs, associés respectivement aux angles $θ_i$ et $θ_{i+1}$, pour lesquels les positions des horizons respectifs $d_i$ et $d_{i+1}$ sont simultanément supérieures ou égales à $d_R$-τ ;

$F_<$ est l'ensemble des couples d'axes de détection successifs, associés respectivement aux angles $θ_i$ et $θ_{i+1}$, pour lesquels la position de l'un au moins des horizons respectifs $d_i$ et $d_{i+1}$ est strictement inférieure à $d_R$-τ ;

$$A_i(x,y) = \frac{1}{4πσ^2} \int_{θ_i}^{θ_{i+1}} Y(x,y,r,θ \mid d_R\text{-}τ \to D) \, dθ$$

$$B_i(x,y) = \frac{1}{2πσ^2} \int_{θ_i}^{θ_{i+1}} \left( Y(x,y,r,θ; d(θ)\text{-}τ \to d(θ)+τ) + \frac{1}{2} Y(x,y,r,θ; d(θ)+τ \to D) \right) dθ$$

$$C(x,y) = \frac{1}{4πσ^2} \int_{Γ(β)} Y(x,y,r,θ \mid 0 \to D) \, dθ$$

$$Y(x,y,r,\theta; \lambda \to \mu) = I_1(x,y,\mu,\theta) - I_1(x,y,\lambda,\theta) + I_2(x,y,\mu,\theta) - I_2(x,y,\lambda,\theta)$$

$$I_1(x,y,r,\theta) = -\sigma^2 \exp\left\{-\frac{1}{2\sigma^2}\left[r^2 + 2rq(x,y,\theta) + w(x,y)\right]\right\}$$

$$I_2(x,y,r,\theta) = -\frac{\sqrt{2\pi}}{2}\sigma q(x,y,\theta)\,\mathrm{erf}\left[\frac{r+q(x,y,\theta)}{\sqrt{2}\sigma}\right]\exp\left\{-\frac{1}{2\sigma^2}m(x,y,\theta)^2\right\}$$

$\sigma$ est un écart-type d'une mesure de la position du télémètre ;
D est une limite axiale prédéterminée ;
$w(x,y)$ est une quantité valant $(x-\mu_x)^2 + (y-\mu_y)^2$;
$q(x,y,\theta)$ est une quantité valant $(x-\mu_x)\cos\theta + (y-\mu_y)\sin\theta$ ;
$m(x,y,\theta)$ est une quantité valant $(x-\mu_x)\sin\theta - (y-\mu_y)\cos\theta$ ; et
$\Gamma(\beta)$ est un secteur angulaire complémentaire d'un secteur angulaire de détection contenant les axes de détection du télémètre, le télémètre présentant l'orientation $\beta$.

Plus précisément, le dispositif de détection 8 est configuré pour obtenir chaque probabilité intermédiaire par un calcul approché de la relation (1). En particulier, le dispositif de détection 8 est configuré pour intégrer numériquement, suivant $\theta$, les grandeurs $I_1(x,y,r,\theta)$ et $I_2(x,y,r,\theta)$ en appliquant, par exemple, la méthode des trapèzes pour chaque intervalle angulaire $[\theta_i; \theta_{i+1}]$ et sur $\Gamma(\beta)$, de façon à obtenir une solution approchée pour $A_i(x,y)$, $B_i(x,y)$ et $C(x,y)$. En variante, une approximation linéaire est réalisée sur les fonctions trigonométriques $\cos\theta$ et $\sin\theta$ mises en oeuvre dans les grandeurs $I_1(x,y,r,\theta)$ et $I_2(x,y,r,\theta)$ de façon à obtenir une solution analytique pour un tel calcul d'intégrales : ceci a pour effet avantageux de réduire la complexité numérique du calcul.

Un telle expression (1) pour la probabilité de présence intermédiaire $P^\beta(x,y)$ au point de coordonnées $(x, y)$, pour l'orientation $\beta$ du télémètre, provient de ce qu'une expression générale de $P^\beta(x,y)$ est :

$$P^\beta(x,y) = \sum_{i=1}^{N-1}\int_{\theta_i}^{\theta_{i+1}}\int_0^\infty g(r,\theta\,|\,x,y)f_i(r\,|\,\theta)r\,dr\,d\theta + \frac{1}{2}\int_{\Gamma(\beta)}\int_0^\infty g(r,\gamma\,|\,x,y)r\,dr\,d\gamma$$

Il ressort de ce qui précède que :

$$Y(x,y,r,\theta; \lambda \to \mu) = \int_\lambda^\mu \exp\left\{-\frac{1}{2\sigma^2}\left[r^2 + 2rq(x,y,\theta) + w(x,y)\right]\right\}r\,dr$$

Un tel calcul de probabilités de présence intermédiaires est réalisé pour chaque point A de coordonnées $(x, y)$, le repère polaire étant ainsi modifié à chaque mise en oeuvre dudit calcul.

Avantageusement, la limite axiale vaut :

$$D = \frac{\varepsilon}{2\sin\dfrac{\Delta\theta}{2}}$$

où $\varepsilon$ est un écart maximal souhaité entre deux axes de détection consécutifs ;
$\Delta\theta$ est le plus grand angle entre deux axes de détection consécutifs.

Ceci est avantageux, dans la mesure où, pour une résolution angulaire donnée du télémètre 4, tout obstacle situé à une distance inférieure à la limite axiale D par rapport au télémètre 4, et dont les dimensions transverses sont supérieures ou égales à l'écart $\varepsilon$ apparaîtra sur la carte de probabilité de présence d'obstacle. Dans ce cas, par un choix judicieux de l'écart ε, est réduite l'apparition de faux négatifs, dits « zones vides ». Un exemple de zone vide est illustré par la figure 1. Sur cette figure les obstacles 11A et 11B sont détectés par le télémètre 4, mais l'obstacle 11C. Avec un écart ε trop important, la carte de probabilité de présence d'obstacle fait apparaître la zone dans laquelle se trouve l'obstacle 11C comme une zone vide d'obstacle.

Le dispositif de détection 8 est, en outre, configuré pour calculer, pour un point donné quelconque de l'espace, la probabilité de présence d'obstacle comme une grandeur proportionnelle à une somme pondérée des probabilités intermédiaires correspondantes, le facteur de pondération associé à chaque probabilité intermédiaire étant égal à la probabilité de l'orientation correspondante.

Par exemple, pour un point donné quelconque de l'espace, le dispositif de détection 6 est configuré pour calculer la probabilité de présence d'obstacle comme étant égale à :

$$P(x,y) = \frac{\sum_{l=-L}^{L} h(\beta_l) P^{\beta_l}(x,y)}{\sum_{l=-L}^{L} h(\beta_l)}$$

où $P(x,y)$ est la probabilité de présence d'obstacle au point de coordonnées (x, y) ;

$\beta_l$ est la l-ème orientation du télémètre parmi les $2L+1$ orientations prédéterminées autour de l'orientation courante $\mu_\beta$ ;

$h(\beta_l)$ est la probabilité que le télémètre présente l'orientation $\beta_l$ connaissant l'orientation courante $\mu_\beta$ ; et

$P^{\beta_l}(x,y)$ est la probabilité de présence intermédiaire au point de coordonnées (x,y), pour l'orientation $\beta_l$ du télémètre.

De préférence, les orientations $\beta_l$ sont choisies de sorte que, pour un entier quelconque compris entre -L et L, les quantités $|\beta_l - \beta_0|$ et $|\beta_{-l} - \beta_0|$ soient égales. En d'autres termes, les orientations $\beta_l$ et $\beta_{-l}$ sont symétriques autour de l'orientation courante $\mu_\beta$.

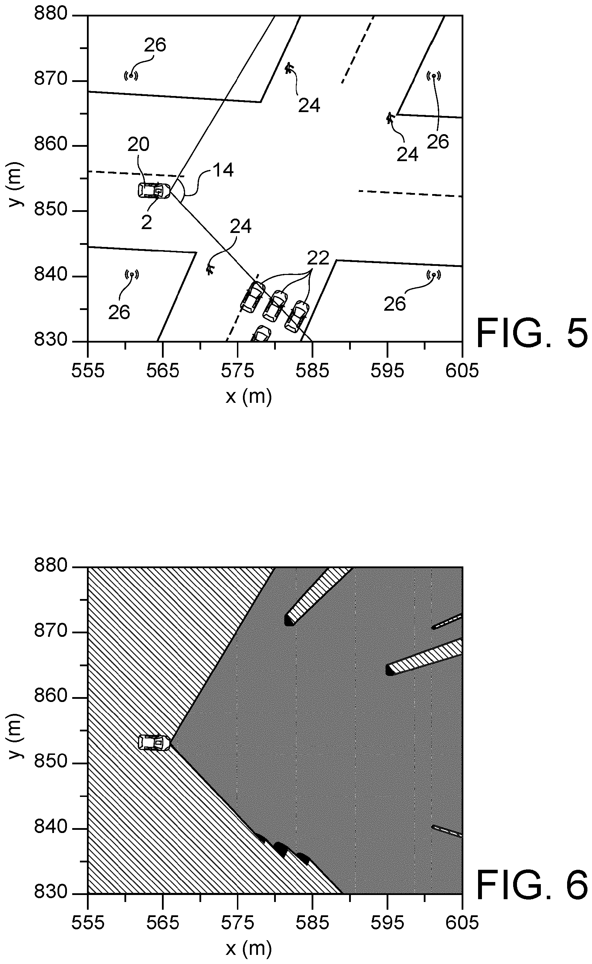

Un exemple de scène dans laquelle le système de détection 2, embarquée à bord d'un véhicule 20, est illustré par la figure 5. Une telle scène comprend d'autres véhicules 22, des piétons 24 et des poteaux 26.

La carte de probabilité de présence obtenue pour une telle scène est illustrée par la figure 6. Pour simplifier la comparaison avec la figure 5, le véhicule 20 a été représenté sur cette carte de probabilité de présence.

Les parties hachurées correspondent aux régions inconnues décrites précédemment, dans lesquelles la présence d'un obstacle est incertaine, soit parce qu'elles ne sont pas sondées par le télémètre, soit parce qu'elles sont écrantées par un obstacle. En outre, parmi les zones non hachurées :

- les parties les plus foncées correspondent aux zones dans lesquelles la probabilité de présence d'un obstacle est la plus élevée ; et
- les parties les plus claires correspondent aux zones dans lesquelles la probabilité de présence d'un obstacle est très basse, c'est-à-dire des zones présumées vides.

Le fonctionnement du système de détection 2 va maintenant être décrit.

Le dispositif de navigation 6 détermine la position et l'orientation courantes du télémètre 4. En outre, le télémètre 4 délivre le signal de détection représentatif de la position, le long de chaque axe de détection 10, de l'horizon de détection correspondant.

Le dispositif de détection 8 détermine, à partir des horizons de détection 9, la position du front de détection 16.

Puis, pour chaque point d'un espace prédéterminé autour du télémètre 4, le dispositif de détection 8 calcule la pluralité de probabilités de présence intermédiaires correspondantes.

Puis, pour chaque point, et à partir des probabilités de présence intermédiaires correspondantes, le dispositif de détection 8 calcule la probabilité de présence d'obstacle en ce point.

Si, dans une zone prédéterminée, la probabilité de présence d'obstacle est supérieure au seuil d'alerte prédéterminé, le dispositif de détection 8 génère une alerte.

Les performances du procédé de détection selon l'invention vont maintenant être comparées à celles de procédés connus, à savoir le procédé CBC (de l'anglais « *Cell By Cell* », pour cellule par cellule), dans lequel, pour chaque cellule d'une grille prédéterminée, il est déterminé si chaque axe de détection passe par ladite cellule, et le procédé BBB (de l'anglais « *Beam By Beam* », pour faisceau par faisceau), dans lequel, pour chaque axe de détection, sont déterminées les cellules qui sont traversées par ledit axe de détection.

Soit $N_c$ le nombre total de cellules de la grille, et $N_b$ le nombre d'axes de détection. La complexité asymptotique du procédé CBC, sans tenir compte des incertitudes sur la position et l'orientation du télémètre, est proportionnelle à $N_c N_b$.

En outre, soit $N_c^b$ le nombre maximal de cellules traversées par un faisceau. La complexité asymptotique du procédé BBB, sans tenir compte des incertitudes sur la position et l'orientation du télémètre, est proportionnelle à $N_c^b N_b$

. Notons que la valeur de $N_c^b$ est généralement inférieure à $N_c$, de sorte que le procédé BBB est généralement plus performant que le procédé CBC.

Néanmoins, la prise en compte des incertitudes de position et d'orientation accroît très fortement la complexité de tels procédés de l'état de la technique, dans la mesure où elle requiert un calcul supplémentaire de fusion. En effet, pour le procédé CBC, une cellule n'est plus nécessairement traversée par un seul axe de détection, du fait des incertitudes de position et orientation précédemment décrites. Par exemple, pour deux positions (ou orientations) différentes du télémètre, une cellule est susceptible d'être traversée par deux axes de détection, la probabilité de présence d'obstacle dans la cellule étant différente pour chacune de ces positions (ou orientations). Une telle différence requiert un calcul de fusion de ces deux probabilités.

De façon similaire, pour le procédé BBB, un axe de détection est susceptible de traverser différents ensembles de cellules pour chaque position ou orientation du télémètre, de manière qu'un même axe de détection est susceptible de traverser une cellule pour une position/orientation donnée et ne plus la traverser pour une autre position/orientation.

Par conséquent, en posant G le nombre de positions incertaines du télémètre, et 2L+1 le nombre d'orientations incertaines de celui-ci, la complexité asymptotique du procédé CBC est proportionnelle à $N_c N_b G^2 (2L+1)^2$, tandis que la complexité asymptotique du procédé BBB est proportionnelle à $N_c^b N_b G^2 (2L+1)^2$.

En ce qui concerne le procédé de détection selon l'invention, sa complexité asymptotique, pour le calcul des probabilités de présence intermédiaires $P^\beta$ en un point donné quelconque, est proportionnelle à $(2k_F N + 2k_C)$, où $k_F$ est le nombre d'intervalles utilisés pour approcher numériquement les intégrales de la relation (1) selon $\theta$ dans chacun des N intervalles $[\theta_i; \theta_{i+1}]$, et kc est le nombre d'intervalles utilisés pour approcher numériquement chaque intégrale dans le secteur angulaire $\Gamma(\beta)$.

Il en résulte que la complexité asymptotique du calcul de la probabilité de présence d'obstacle P en un point donné quelconque est proportionnelle à $(2k_F N + 2k_C) N_c (2L+1)$.

Il est à noter que, du fait de l'approximation linéaire des fonctions trigonométriques sinus et cosinus décrite précédemment, cette complexité est susceptible d'être encore réduite.

A titre d'exemple, en prenant $N_b$=361, $N_c$=40000, $N_c^b = 200$, G=100, L= 20, N=360, $k_F$=5 et kc=50, le nombre d'opérations par point (ou par cellule) pour le calcul de la probabilité de présence d'obstacle vaut :

- pour le procédé CBC : $6{,}0648.10^9$ opérations ;
- pour le procédé BBB : $3{,}0342.10^7$ opérations ; et
- pour le procédé de détection selon l'invention : $1{,}517.10^5$ opérations.

Grâce au procédé de détection selon l'invention, la complexité du calcul de la probabilité de présence d'obstacle en chaque point de la carte est inférieure de plusieurs ordres de grandeurs à celle inhérente aux procédés connus. Il en résulte la possibilité d'accroître la résolution de la carte sans préjudice important pour les temps de calcul.

Comme indiqué précédemment, selon une variante, le système de détection 2 est apte à déterminer une carte en trois dimensions de la probabilité de présence d'obstacle.

Dans ce cas, le télémètre 4 est avantageusement configuré pour présenter des axes de détection définissant une pluralité de nappes non confondues.

En outre, le dispositif de navigation 6 est configuré pour déterminer les trois coordonnées du télémètre 4 dans l'espace, ainsi que ses attitudes (tangage, lacet, roulis). Dans ce cas, les modèles d'incertitudes sont étendus à l'ensemble des données additionnelles mesurées par le dispositif de navigation 6.

En variante encore, le système de détection 2 comprend une pluralité de télémètres 4. Dans ce cas, le dispositif de détection 8 est configuré pour fusionner les données calculées à partir des signaux de détection reçus depuis chaque télémètre 4 pour déterminer la carte de probabilité de présence d'obstacle.

**Revendications**

1. Procédé de détection d'obstacle mis en oeuvre par ordinateur, **caractérisé en ce qu'**il comporte, pour au moins un télémètre (4) présentant une pluralité d'axes de détection (10), à partir d'une position courante du télémètre (4), d'un modèle d'incertitude sur la position du télémètre (4) et d'un signal de détection délivré par le télémètre (4), le signal de détection étant indicatif de la position, le long de chaque axe de détection (10), d'un horizon de détection (9) correspondant audit axe de détection (10), les étapes :

- calcul, pour chaque point d'un espace autour du télémètre (4), à partir de la position courante du télémètre (4), du modèle d'incertitude sur la position du télémètre (4) et du signal de détection, d'une pluralité de probabilités de présence intermédiaires correspondantes, chaque probabilité de présence intermédiaire étant associée à une orientation respective (β) du télémètre (4) parmi une pluralité d'orientations prédéterminées autour d'une orientation courante du télémètre, chacune des orientations prédéterminées étant considérée comme non entachée d'erreur ;
- pour chaque point de l'espace, calcul d'une probabilité de présence d'obstacle à partir de chaque probabilité de présence intermédiaire correspondante et d'un modèle d'incertitude sur l'orientation du télémètre (4) ;
- génération d'une alerte si la probabilité de présence d'obstacle dans une zone prédéterminée par rapport au télémètre (4) est supérieure ou égale à un seuil d'alerte prédéterminé.

2. Procédé selon la revendication 1, dans lequel, pour un point donné quelconque de l'espace, la probabilité de présence d'obstacle est proportionnelle à une somme pondérée des probabilités intermédiaires correspondantes, un facteur de pondération associé à chaque probabilité intermédiaire étant égal à une probabilité de l'orientation correspondante.

3. Procédé selon la revendication 2, dans lequel, pour un point donné quelconque de l'espace, la probabilité de présence d'obstacle est égale à :

$$P(x,y) = \frac{\sum_{l=-L}^{L} h(\beta_l) P^{\beta_l}(x,y)}{\sum_{l=-L}^{L} h(\beta_l)}$$

où P(x, y) est la probabilité de présence d'obstacle au point de coordonnées (x, y) ;

$\beta_l$ est la l-ème orientation du télémètre (4) parmi 2L+1 orientations prédéterminées autour de l'orientation courante ;

$h(\beta_l)$ est la probabilité que le télémètre (4) présente l'orientation $\beta_l$ connaissant l'orientation courante ; et

$P^{\beta l}(x,y)$ est la probabilité de présence intermédiaire au point de coordonnées (x,y), pour l'orientation $\beta_l$ du télémètre.

4. Procédé selon l'une quelconque des revendications 1 à 3, dans lequel le modèle d'incertitude sur l'orientation du télémètre (4) met en oeuvre la loi de probabilité :

$$h(\beta) = \begin{cases} \dfrac{1}{\sigma_\beta \sqrt{2\pi}\, \mathrm{erf}\left(\dfrac{\pi}{\sqrt{2}\sigma_\beta}\right)} \exp\left[-\dfrac{1}{2\sigma_\beta^2}\left(\beta-\mu_\beta\right)^2\right], & \text{si } -\pi \leq \beta < \pi \\ 0, & \text{sinon} \end{cases}$$

où h(β) est la probabilité que le télémètre (4) présente une orientation β quelconque donnée ;

$\sigma_\beta$ est un écart-type d'une mesure de l'orientation du télémètre (4) ;

$\mu_\beta$ est l'orientation courante du télémètre (4) ;

« erf » est la fonction d'erreur ; et

« exp » est la fonction exponentielle.

5. Procédé selon l'une quelconque des revendications 1 à 4, dans lequel les axes de détection (10) sont issus d'un même point d'émission (12) du télémètre (4), les axes de détection (10) étant contenus dans un secteur angulaire de détection (14), le procédé comprenant l'estimation de la position de chaque point d'un front de détection (16) défini dans le secteur angulaire de détection (14) et interceptant chaque horizon de détection (9).

6. Procédé selon la revendication 5, mettant en oeuvre un modèle de détection de la forme :

$$f_i(r|\theta)= \begin{cases} u(r-d(\theta)+\tau) - \dfrac{1}{2}u(r-d(\theta)-\tau), \text{ si } d_i \text{ ou/et } d_{i+1}<d_R-\tau \\[2em] \dfrac{1}{2}u(r-d_R+\tau), \text{ si } d_i \text{ et } d_{i+1}\geq d_R-\tau \end{cases}$$

où $f_i(r|\theta)$ est la probabilité de détecter un obstacle (11) à une distance r et selon une coordonnée angulaire $\theta$ comprise entre des angles $\theta_i$ et $\theta_{i+1}$ associés à deux axes de détection (10) successifs, la position et l'orientation du télémètre (4) n'étant pas entachées d'erreur ;

$d_i$, respectivement $d_{i+1}$, est la position, selon l'axe de détection (4) associé à l'angle $\theta_i$, respectivement $\theta_{i+1}$, de l'horizon de détection (9) correspondant ;

$d_R$ est la portée du télémètre (4) ;

$\tau$ est l'incertitude sur la mesure, par le télémètre (4), de la position de l'horizon de détection (9) ;

« u » la fonction échelon unité ; et

$d(\theta)$ est la position du front de détection (16) pour la coordonnée angulaire $\theta$.

7. Procédé selon l'une quelconque des revendications 1 à 6, dans lequel la probabilité de présence intermédiaire à un point donné quelconque, pour une orientation donnée du télémètre (4), est évaluée à partir de l'expression :

$$P^\beta(x,y)= \sum_{i\in F_\geq} A_i(x,y) + \sum_{i\in F_<} B_i(x,y)+C(x,y)$$

où $P^\beta(x,y)$ est la probabilité de présence intermédiaire au point de coordonnées (x,y), pour l'orientation $\beta$ du télémètre (4) ;

$F_\geq$ est l'ensemble des couples d'axes de détection (10) successifs, associés respectivement aux angles $\theta_i$ et $\theta_{i+1}$, pour lesquels les positions des horizons de détection (9) respectifs $d_i$ et $d_{i+1}$ sont simultanément supérieures ou égales à $d_R-\tau$ ;

$F_<$ est l'ensemble des couples d'axes de détection (10) successifs, associés respectivement aux angles $\theta_i$ et $\theta_{i+1}$, pour lesquels la position de l'un au moins des horizons de détection (9) respectifs $d_i$ et $d_{i+1}$ est strictement inférieure à $d_R-\tau$ ;

$A_i(x,y)$ est une grandeur définie comme :

$$A_i(x,y)=\frac{1}{4\pi\sigma^2} \int_{\theta_i}^{\theta_{i+1}} Y(x,y,r,\theta\,|\,d_R-\tau\rightarrow D)\,d\theta$$

$B_i(x,y)$ est une grandeur définie comme :

$$B_i(x,y)=\frac{1}{2\pi\sigma^2} \int_{\theta_i}^{\theta_{i+1}} \left( Y(x,y,r,\theta;\,d(\theta)-\tau\rightarrow d(\theta)+\tau) + \frac{1}{2}Y(x,y,r,\theta;\,d(\theta)+\tau\rightarrow D)\right) d\theta$$

$C(x,y)$ est une grandeur définie comme :

$$C(x,y)= \frac{1}{4\pi\sigma^2} \int_{\Gamma(\beta)} Y(x,y,r,\theta\,|\,0\rightarrow D)d\theta$$

où :

$$Y(x,y,r,\theta; \lambda \to \mu) = I_1(x,y,\mu,\theta) - I_1(x,y,\lambda,\theta) + I_2(x,y,\mu,\theta) - I_2(x,y,\lambda,\theta)$$

avec :

$$I_1(x,y, r,\theta) = -\sigma^2 \exp\left\{-\frac{1}{2\sigma^2}\left[r^2 + 2rq(x,y,\theta) + w(x,y)\right]\right\}$$

et :

$$I_2(x,y,r,\theta) = -\frac{\sqrt{2\pi}}{2}\sigma q(x,y,\theta) \operatorname{erf}\left[\frac{r+q(x,y,\theta)}{\sqrt{2}\sigma}\right] \exp\left\{-\frac{1}{2\sigma^2} m(x,y,\theta)^2\right\}$$

$\sigma$ est un écart-type d'une mesure de la position du télémètre ; D est une limite axiale prédéterminée ;
w(x, y) est une quantité valant $(x-\mu_x)^2 + (y-\mu_y)^2$
q(x, y, $\theta$) est une quantité valant $(x-\mu_x)\cos\theta + (y-\mu_y)\sin\theta$
m(x, y, $\theta$) est une quantité valant $(x-\mu_x)\sin\theta - (y-\mu_y)\cos\theta$
$(\mu_x, \mu_y)$ sont des coordonnées représentatives de la position courante du télémètre (4) ; et
$\Gamma(\beta)$ est un secteur angulaire complémentaire d'un secteur angulaire de détection (14) contenant les axes de détection (10) du télémètre (4), le télémètre (4) présentant l'orientation $\beta$.

**8.** Procédé selon la revendication 7, dans lequel la limite axiale vaut :

$$D = \frac{\varepsilon}{2\sin\frac{\Delta\theta}{2}}$$

où $\varepsilon$ est un écart maximal souhaité entre deux axes de détection (10) consécutifs ;
$\Delta\theta$ est le plus grand angle entre deux axes de détection (10) consécutifs.

**9.** Produit programme d'ordinateur comprenant des instructions de code de programme qui, lorsqu'elles sont exécutées par un ordinateur, mettent en oeuvre le procédé de détection selon l'une quelconque des revendications 1 à 8.

**10.** Dispositif (8) de détection d'obstacle configuré de façon à, pour au moins un télémètre (4) présentant une pluralité d'axes de détection (10), à partir d'une position courante du télémètre (4), d'un modèle d'incertitude sur la position du télémètre (4) et d'un signal de détection délivré par le télémètre (4), le signal de détection étant indicatif de la position, le long de chaque axe de détection (10), d'un horizon de détection (9) correspondant audit axe de détection (10) :

- calculer, pour chaque point d'un espace autour du télémètre (4), à partir de la position courante du télémètre (4), du modèle d'incertitude sur la position du télémètre (4) et du signal de détection, d'une pluralité de probabilités de présence intermédiaires correspondantes, chaque probabilité de présence intermédiaire étant associée à une orientation respective ($\beta$) du télémètre (4) parmi une pluralité d'orientations prédéterminées autour d'une orientation courante du télémètre, chacune des orientations prédéterminées étant considérée comme non entachée d'erreur ;
- pour chaque point de l'espace, calculer une probabilité de présence d'obstacle à partir de chaque probabilité de présence intermédiaire correspondante et d'un modèle d'incertitude sur l'orientation du télémètre (4) ;
- générer une alerte si la probabilité de présence d'obstacle dans une zone prédéterminée par rapport au télémètre (4) est supérieure ou égale à un seuil d'alerte prédéterminé.

**11.** Système (2) de détection d'obstacle comprenant un dispositif (8) de détection d'obstacle selon la revendication 10, un télémètre (4) et un dispositif de navigation (6),

le télémètre (4) étant associé à une pluralité d'axes de détection (10) et étant configuré pour délivrer un signal de détection indicatif de la position, le long de chaque axe de détection (10), d'un horizon de détection (9) correspondant audit axe de détection (10),

le dispositif de navigation (6) étant configuré pour déterminer la position courante et l'orientation courante du télémètre (4),

le dispositif de détection (8) étant connecté au télémètre (4) pour recevoir le signal de détection et au dispositif de navigation (6) pour recevoir la position courante et l'orientation courante du télémètre (4).

**12.** Véhicule (20) embarquant un système (2) de détection d'obstacle selon la revendication 11, les axes de détection (10) du télémètre (4) étant dirigés vers l'extérieur du véhicule (20).

**Patentansprüche**

**1.** Computerimplementiertes Verfahren zum Detektieren von Hindernissen, **dadurch gekennzeichnet, dass** es für mindestens einen Entfernungsmesser (4), der eine Vielzahl von Detektionsachsen (10) aufweist, ausgehend von einer aktuellen Position des Entfernungsmessers (4), einem Unsicherheitsmodell für die Position des Entfernungsmessers (4) und einem durch den Entfernungsmesser (4) gelieferten Detektionssignal, wobei das Detektionssignal die Position eines Detektionshorizonts (9), der der Detektionsachse (10) entspricht, entlang jeder Detektionsachse (10) anzeigt, die folgenden Schritte umfasst:

- Berechnen, für jeden Punkt eines Raums um den Entfernungsmesser (4) herum, ausgehend von der aktuellen Position des Entfernungsmessers (4), dem Unsicherheitsmodell für die Position des Entfernungsmessers (4) und dem Detektionssignal, einer Vielzahl von entsprechenden mittleren Anwesenheitswahrscheinlichkeiten, wobei jede mittlere Anwesenheitswahrscheinlichkeit einer jeweiligen Ausrichtung ($\beta$) des Entfernungsmessers (4) aus einer Vielzahl von vorbestimmten Ausrichtungen um eine aktuelle Ausrichtung des Entfernungsmessers zugeordnet ist, wobei jede Ausrichtung der vorbestimmten Ausrichtungen als nicht fehlerhaft angesehen wird;

- Berechnen einer Wahrscheinlichkeit der Anwesenheit eines Hindernisses für jeden Punkt im Raum ausgehend von jeder entsprechenden mittleren Anwesenheitswahrscheinlichkeit und einem Unsicherheitsmodell für die Ausrichtung des Entfernungsmessers (4); und

- Erzeugen einer Warnung, wenn die Wahrscheinlichkeit der Anwesenheit eines Hindernisses in einer vorbestimmten Zone in Bezug auf den Entfernungsmesser (4) größer oder gleich einer vorbestimmten Alarmschwelle ist.

**2.** Verfahren nach Anspruch 1, wobei für einen beliebigen gegebenen Punkt im Raum die Wahrscheinlichkeit der Anwesenheit eines Hindernisses proportional zu einer gewichteten Summe der entsprechenden mittleren Wahrscheinlichkeiten ist, wobei ein mit jeder mittleren Wahrscheinlichkeit verbundener Gewichtungsfaktor gleich einer Wahrscheinlichkeit der entsprechenden Ausrichtung ist.

**3.** Verfahren nach Anspruch 2, wobei für einen beliebigen gegebenen Punkt im Raum die Wahrscheinlichkeit der Anwesenheit eines Hindernisses gleich Folgendem ist:

$$P(x,y) = \frac{\sum_{l=-L}^{L} h(\beta_l) P^{\beta_l}(x,y)}{\sum_{l=-L}^{L} h(\beta_l)}$$

wobei P(x,y) die Wahrscheinlichkeit der Anwesenheit eines Hindernisses an dem Punkt mit den Koordinaten (x, y) ist;

$\beta_l$ eine l. Ausrichtung des Entfernungsmessers (4) unter 2L+1 vorbestimmten Ausrichtungen um die aktuelle Ausrichtung ist;

$h(\beta_l)$ die Wahrscheinlichkeit dafür ist, dass der Entfernungsmesser (4) die Ausrichtung $\beta_l$ aufweist, wenn die aktuelle Ausrichtung bekannt ist; und

$P^{\beta_l}(x,y)$ die mittlere Wahrscheinlichkeit der Anwesenheit an dem Punkt mit den Koordinaten (x,y) für die Ausrichtung $\beta_l$ des Entfernungsmessers ist.

**4.** Verfahren nach einem der Ansprüche 1 bis 3, wobei das Unsicherheitsmodell für die Ausrichtung des Entfernungsmessers (4) das Wahrscheinlichkeitsgesetz anwendet:

$$h(\beta)= \begin{cases} \dfrac{1}{\sigma_\beta\sqrt{2\pi}\ \mathrm{erf}\left(\dfrac{\pi}{\sqrt{2}\sigma_\beta}\right)}\exp\left[-\dfrac{1}{2\sigma_\beta^2}\left(\beta-\mu_\beta\right)^2\right] \end{cases},\ '$$

wenn $-\pi\leq\beta<\pi$
0, andernfalls

wobei $h(\beta)$ die Wahrscheinlichkeit ist, dass der Entfernungsmesser (4) eine beliebige bestimmte Ausrichtung $\beta$ aufweist;

$\sigma_\beta$ eine Standardabweichung einer Messung der Ausrichtung des Entfernungsmessers (4) ist;

$\mu_\beta$ die aktuelle Ausrichtung des Entfernungsmessers (4) ist;

"erf" die Fehlerfunktion ist; und

"exp" die Exponentialfunktion ist.

5. Verfahren nach einem der Ansprüche 1 bis 4, wobei die Detektionsachsen (10) von einem gleichen Emissionspunkt (12) des Entfernungsmessers (4) stammen, wobei die Detektionsachsen (10) in einem Winkeldetektionssektor (14) enthalten sind, wobei das Verfahren das Schätzen der Position jedes Punkts einer im Winkeldetektionssektor (14) definierten Detektionsfront (16) und das Abfangen jedes Detektionshorizonts (9) umfasst.

6. Verfahren nach Anspruch 5, das ein Detektionsmodell der folgenden Form implementiert:

$$f_i(r|\theta)= \begin{cases} u(r-d(\theta)+\tau) - \dfrac{1}{2}u(r-d(\theta)-\tau),\ \text{wenn } d_i\ \text{oder/und } d_{i+1}<d_R-\tau \\[2mm] \dfrac{1}{2}u(r-d_R+\tau),\ \text{wenn } d_i\ \text{und } d_{i+1}\geq d_R-\tau \end{cases}$$

wobei $f_i(r|\theta)$ die Wahrscheinlichkeit des Detektierens eines Hindernisses (11) in einer Entfernung r und gemäß einer Winkelkoordinate $\theta$ ist, die zwischen den Winkeln $\theta_i$ und $\theta_{i+1}$ liegt, die zwei aufeinanderfolgenden Detektionsachsen (10) zugeordnet sind, wobei die Position und die Ausrichtung des Entfernungsmessers (4) nicht fehlerbehaftet sind;

$d_i$ bzw. $d_{i+1}$ die Position entlang der Detektionsachse (4) ist, die dem Winkel $\theta_i$ bzw. $\theta_{i+1}$ des entsprechenden Detektionshorizonts (9) zugeordnet ist;

$d_R$ die Reichweite des Entfernungsmessers (4) ist;

$\tau$ die Unsicherheit bei der Messung der Position des Detektionshorizonts (9) durch den Entfernungsmesser (4) ist;

"u" die Einheitsschrittfunktion ist; und

$d(\theta)$ die Position der Detektionsfront (16) für die Winkelkoordinate $\theta$ ist.

7. Verfahren nach einem der Ansprüche 1 bis 6, wobei die mittlere Wahrscheinlichkeit der Anwesenheit an einem beliebigen gegebenen Punkt für eine gegebene Ausrichtung des Entfernungsmessers (4) anhand der folgenden Gleichung berechnet wird:

$$P^\beta(x,y)= \sum_{i\in F_\geq} A_i(x,y) + \sum_{i\in F_<} B_i(x,y)+C(x,y)$$

wobei $P^\beta(x,y)$ die mittlere Wahrscheinlichkeit der Anwesenheit an dem Punkt mit den Koordinaten (x,y) für die Ausrichtung $\beta$ des Entfernungsmessers (4) ist;

$F_\geq$ der Satz aller aufeinanderfolgenden Paare von Detektionsachsen (10) ist, die den Winkeln $\theta_i$ bzw. $\theta_{i+1}$ zugeordnet sind, für die die Positionen der jeweiligen Detektionshorizonte (9) $d_i$ und $d_{i+1}$ gleichzeitig größer oder gleich $d_R-\tau$ sind;

$F<$ der Satz aller aufeinanderfolgenden Paare von Detektionsachsen (10) ist, die jeweils den Winkeln $\theta_i$ bzw. $\theta_{i+1}$ zugeordnet sind, für die die Position des mindestens einen der jeweiligen Detektionshorizonte (9) $d_i$ und $d_{i+1}$ strikt kleiner als $d_R-\tau$ ist;

$A_i(x,y)$ eine Menge ist, die definiert ist als:

$$A_i(x,y)=\frac{1}{4\pi\sigma^2}\int_{\theta_i}^{\theta_{i+1}}\Upsilon(x,y,r,\theta\,|\,d_R\text{-}\tau\rightarrow D)\,d\theta$$

$B_i(x,y)$ eine Menge ist, die definiert ist als:

$$B_i(x,y)=\frac{1}{2\pi\sigma^2}\int_{\theta_i}^{\theta_{i+1}}\left(\Upsilon(x,y,r,\theta;\,d(\theta)\text{-}\tau\rightarrow d(\theta)\text{+}\tau)+\frac{1}{2}\Upsilon(x,y,r,\theta;\,d(\theta)\text{+}\tau\rightarrow D)\right)d\theta$$

$C(x,y)$ eine Menge ist, die definiert ist als:

$$C(x,y)=\frac{1}{4\pi\sigma^2}\int_{\Gamma(\beta)}\Upsilon(x,y,r,\theta\,|\,0\rightarrow D)d\theta$$

wobei:

$$\Upsilon(x,y,r,\theta;\,\lambda\rightarrow\mu)=I_1(x,y,\mu,\theta)\text{-}I_1(x,y,\lambda,\theta)+I_2(x,y,\mu,\theta)\text{-}I_2(x,y,\lambda,\theta)$$

mit:

$$I_1(x,y,r,\theta)=\text{-}\sigma^2\exp\left\{\text{-}\frac{1}{2\sigma^2}[r^2+2rq(x,y,\theta)+w(x,y)]\right\}$$

und:

$$I_2(x,y,r,\theta)=\text{-}\frac{\sqrt{2\pi}}{2}\sigma q(x,y,\theta)\,\text{erf}\left[\frac{r+q(x,y,\theta)}{\sqrt{2}\sigma}\right]\exp\left\{\text{-}\frac{1}{2\sigma^2}m(x,y,\theta)^2\right\}$$

$\sigma$ eine Standardabweichung einer Messung der Position des Entfernungsmessers ist;
D eine vorbestimmte axiale Grenze ist;
w(x, y) eine Größe gleich $(x\text{-}\mu_x)^2 + (y\text{-}\mu_y)^2$ ist;
q(x, y, $\theta$) eine Größe gleich $(x\text{-}\mu_x)\cos\theta + (y\text{-}\mu_y)\sin\theta$ ist;
m(x, y, $\theta$) eine Größe gleich $(x\text{-}\mu_x)\sin\theta - (y\text{-}\mu_y)\cos\theta$ ist;
$(\mu_x, \mu_y)$ Koordinaten sind, die die aktuelle Position des Entfernungsmessers (4) darstellen; und
$\Gamma(\beta)$ ein komplementärer Winkelsektor eines Winkeldetektionssektors (14) ist, der die Detektionsachsen (10) des Entfernungsmessers (4) enthält, wobei der Entfernungsmesser (4) die Ausrichtung $\beta$ aufweist.

8. Verfahren nach Anspruch 7, wobei für die axiale Grenze gilt:

$$D=\frac{\varepsilon}{2\sin\frac{\Delta\theta}{2}}$$

wobei $\varepsilon$ eine gewünschte maximale Differenz zwischen zwei aufeinanderfolgenden Detektionsachsen (10) ist;
$\Delta\theta$ der größte Winkel zwischen zwei aufeinanderfolgenden Detektionsachsen (10) ist.

9. Computerprogrammprodukt, das Programmcodebefehle umfasst, die, wenn sie von einem Computer ausgeführt werden, das Detektionsverfahren nach einem der Ansprüche 1 bis 8 implementieren.

10. Vorrichtung (8) zum Detektieren von Hindernissen, die für mindestens einen Entfernungsmesser (4), der eine Vielzahl von Detektionsachsen (10) aufweist, ausgehend von einer aktuellen Position des Entfernungsmessers (4), einem Unsicherheitsmodell für die Position des Entfernungsmessers (4) und einem durch den Entfernungsmesser (4) gelieferten Detektionssignal, wobei das Detektionssignal die Position eines Detektionshorizonts (9), der der Detektionsachse (10) entspricht, entlang jeder Detektionsachse (10) anzeigt, für Folgendes konfiguriert ist:

- Berechnen, für jeden Punkt eines Raums um den Entfernungsmesser (4) herum, ausgehend von der aktuellen Position des Entfernungsmessers (4), dem Unsicherheitsmodell für die Position des Entfernungsmessers (4) und dem Detektionssignal, einer Vielzahl von entsprechenden mittleren Anwesenheitswahrscheinlichkeiten, wobei jede mittlere Anwesenheitswahrscheinlichkeit einer jeweiligen Ausrichtung ($\beta$) des Entfernungsmessers (4) aus einer Vielzahl von vorbestimmten Ausrichtungen um eine aktuelle Ausrichtung des Entfernungsmessers zugeordnet ist, wobei jede der vorbestimmten Ausrichtungen als nicht fehlerhaft angesehen wird;
- Berechnen einer Wahrscheinlichkeit der Anwesenheit eines Hindernisses für jeden Punkt im Raum ausgehend von jeder entsprechenden mittleren Anwesenheitswahrscheinlichkeit und einem Unsicherheitsmodell für die Ausrichtung des Entfernungsmessers (4);
- Erzeugen einer Warnung, wenn die Wahrscheinlichkeit der Anwesenheit eines Hindernisses in einer vorbestimmten Zone in Bezug auf den Entfernungsmesser (4) größer oder gleich einer vorbestimmten Alarmschwelle ist.

11. System (2) zum Detektieren von Hindernissen, das eine Vorrichtung (8) zum Detektieren von Hindernissen nach Anspruch 10, einen Entfernungsmesser (4) und eine Navigationsvorrichtung (6) umfasst,

wobei der Entfernungsmesser (4) einer Vielzahl von Detektionsachsen (10) zugeordnet und dazu konfiguriert ist, ein Detektionssignal zu liefern, das die Position eines Detektionshorizonts (9), der der Detektionsachse (10) entspricht, entlang jeder Detektionsachse (10) anzeigt, wobei die Navigationsvorrichtung (6) dazu konfiguriert ist, die aktuelle Position und die aktuelle Ausrichtung des Entfernungsmessers (4) zu bestimmen, wobei die Detektionsvorrichtung (8) mit dem Entfernungsmesser (4) verbunden ist, um das Detektionssignal zu empfangen, und mit der Navigationsvorrichtung (6) verbunden ist, um die aktuelle Position und die aktuelle Ausrichtung des Entfernungsmessers (4) zu empfangen.

12. Fahrzeug (20), das mit einem System (2) zum Detektieren von Hindernissen nach Anspruch 11 ausgestattet ist, wobei die Detektionsachsen (10) des Entfernungsmessers (4) in Richtung einer Außenseite des Fahrzeugs (20) gerichtet sind.

**Claims**

1. Computer-implemented method for detecting an obstacle, **characterised in that** it includes, for at least one telemeter (4) having a plurality of detection axes (10), from a current position of the telemeter (4), an uncertainty model on the position of the telemeter (4) and a detection signal delivered by the telemeter (4), the detection signal being indicative of the position, along each detection axis (10), of a detection horizon (9) corresponding to said detection axis (10), the steps of:

- calculating, for each point of a space around the telemeter (4), from the current position of the telemeter (4), the uncertainty model on the position of the telemeter (4) and the detection signal, of a plurality of corresponding intermediate probabilities of presence, each intermediate probability of presence being associated with a respective orientation ($\beta$) of the telemeter (4) among a plurality of predetermined orientations around a current orientation of the telemeter, each orientation being considered free of errors;
- for each point of space, calculating a probability of the presence of an obstacle from each corresponding intermediate probability of presence and from an uncertainty model on the orientation of the telemeter (4);
- generating an alert if the probability of the presence of an obstacle in a predetermined zone with respect to the telemeter (4) is greater than or equal to a predetermined alert threshold.

2. Method according to claim 1, wherein, for any given point of space, the probability of the presence of an obstacle is proportional to a weighted sum of the corresponding intermediate probabilities, a weighting factor associated with each intermediate probability being equal to a probability of the corresponding orientation.

3. Method according to claim 2, wherein, for any given point of space, the probability of the presence of an obstacle is equal to:

$$P(x,y) = \frac{\sum_{l=-L}^{L} h(\beta_l) P^{\beta_l}(x,y)}{\sum_{l=-L}^{L} h(\beta_l)}$$

where $P(x, y)$ is the probability of the presence of an obstacle at the point having coordinates $(x, y)$;
$\beta_l$ is the l-th orientation of the telemeter (4) among $2L+1$ predetermined orientations around the current orientation;
$h(\beta_l)$ is the probability that the telemeter (4) has the orientation $\beta_l$ knowing the current orientation; and
$P^{\beta_l}(x,y)$ is the intermediate probability of presence at the point having coordinates $(x,y)$, for the orientation $\beta_l$ of the telemeter.

4. Method according to any one of claims 1 to 3, wherein the uncertainty model on the orientation of the telemeter (4) implements the law of probability:

$$h(\beta) = \begin{cases} \dfrac{1}{\sigma_\beta \sqrt{2\pi} \, \text{erf}\left(\dfrac{\pi}{\sqrt{2}\sigma_\beta}\right)} \exp\left[-\dfrac{1}{2\sigma_\beta^2}\left(\beta-\mu_\beta\right)^2\right], & \text{if } -\pi \leq \beta < \pi \\ 0, & \text{otherwise} \end{cases}$$

where $h(\beta)$ is the probability that the telemeter (4) has any given orientation $\beta$;
$\sigma_\beta$ is a standard deviation of a measurement of the orientation of the telemeter (4);
$\mu_\beta$ is the current orientation of the telemeter (4);
"erf" is the error function; and
"exp" is the exponential function.

5. Method according to any one of claims 1 to 4, wherein the detection axes (10) come from the same emission point (12) of the telemeter (4), the detection axes (10) being contained in an angular detection sector (14), the method comprising estimating the position of each point of a detection front (16) defined in the angular detection sector (14) and intercepting each detection horizon (9).

6. Method according to claim 5, implementing a detection model of the form:

$$f_i(r|\theta) = \begin{cases} u(r-d(\theta)+\tau) - \dfrac{1}{2} u(r-d(\theta)-\tau), & \text{if } d_i \text{ or/and } d_{i+1} < d_R - \tau \\ \dfrac{1}{2} u(r-d_R+\tau), & \text{if } d_i \text{ and } d_{i+1} \geq d_R - \tau \end{cases}$$

where $f_i(r|\theta)$ is the probability of detecting an obstacle (11) at a distance r and according to an angular coordinate $\theta$ comprised between angles $\theta_i$ and $\theta_{i+1}$ associated with two successive detection axes (10), the position and the orientation of the telemeter (4) being certain;
$d_i$, respectively $d_{i+1}$, is the position, along the detection axis (4) associated with the angle $\theta_i$, respectively $\theta_{i+1}$, of the corresponding detection horizon (9);
$d_R$ is the range of the telemeter (4);
$\tau$ is the uncertainty on the measurement, by the telemeter (4), of the position of the detection horizon (9);
"u" the unit step function; and
$d(\theta)$ is the position of the detection front (16) for the angular coordinate $\theta$.

7. Method according to any one of claims 1 to 6, wherein the intermediate probability of presence at any given point, for a given orientation of the telemeter (4), is evaluated from the expression:

$$P^\beta(x,y)= \sum_{i \in F_\geq} A_i(x,y) + \sum_{i \in F_<} B_i(x,y)+C(x,y)$$

where $P^\beta(x,y)$ is the intermediate probability of presence at the point having coordinates (x,y), for the orientation $\beta$ of the telemeter (4);

$F_\geq$ is the set of the successive pairs of detection axes (10), associated respectively with angles $\theta_i$ and $\theta_{i+1}$, for which the positions of the respective detection horizons (9) $d_i$ and $d_{i+1}$ are simultaneously greater than or equal to $d_R$-$\tau$;

$F_<$ is the set of the successive pairs of detection axes (10), associated respectively with angles $\theta_i$ and $\theta_{i+1}$, for which the position of at least one of the respective detection horizons (9) $d_i$ and $d_{i+1}$ is strictly less than $d_R$-$\tau$;

$A_i(x,y)$ is a function defined as:

$$A_i(x,y)=\frac{1}{4\pi\sigma^2} \int_{\theta_i}^{\theta_{i+1}} Y(x,y,r,\theta \,|\, d_R\text{-}\tau \rightarrow D)\, d\theta$$

$B_i(x,y)$ is a function defined as:

$$B_i(x,y)=\frac{1}{2\pi\sigma^2} \int_{\theta_i}^{\theta_{i+1}} \left( Y(x,y,r,\theta; d(\theta)\text{-}\tau \rightarrow d(\theta)+\tau) + \frac{1}{2}Y(x,y,r,\theta; d(\theta)+\tau \rightarrow D)\right) d\theta$$

$C(x,y)$ is a function defined as:

$$C(x,y)= \frac{1}{4\pi\sigma^2} \int_{\Gamma(\beta)} Y(x,y,r,\theta \,|\, 0 \rightarrow D)d\theta$$

where:

$$Y(x,y,r,\theta; \lambda \rightarrow \mu)=I_1(x,y,\mu,\theta)- I_1(x,y,\lambda,\theta)+I_2(x,y,\mu,\theta)- I_2(x,y,\lambda,\theta)$$

with:

$$I_1(x,y, r,\theta)=\text{-}\sigma^2 \exp\left\{-\frac{1}{2\sigma^2} [r^2+2rq(x,y,\theta)+w(x,y)]\right\}$$

and:

$$I_2(x,y,r,\theta)=\text{-}\frac{\sqrt{2\pi}}{2} \sigma q(x,y,\theta)\, \text{erf}\left[\frac{r+q(x,y,\theta)}{\sqrt{2}\sigma}\right] \exp\left\{-\frac{1}{2\sigma^2}m(x,y,\theta)^2\right\}$$

$\sigma$ is a standard deviation of a measurement of the position of the telemeter;
D is a predetermined axial limit;
w(x, y) is a quantity equal to $(x\text{-}\mu_x)^2 + (y\text{-}\mu_y)^2$

$q(x, y, \theta)$ is a quantity equal to $(x-\mu_x)\cos\theta + (y-\mu_y)\sin\theta$

$m(x, y, \theta)$ is a quantity equal to $(x-\mu_x)\sin\theta - (y-\mu_y)\cos\theta$

$(\mu_x, \mu_y)$ are coordinates that represent the current position of the telemeter (4); and

$\Gamma(\beta)$ is a complementary angular sector of an angular detection sector (14) containing the detection axes (10) of the telemeter (4), the telemeter (4) having the orientation $\beta$.

8. Method according to claim 7, wherein the axial limit is equal to:

$$D = \frac{\varepsilon}{2\sin\dfrac{\Delta\theta}{2}}$$

where $\varepsilon$ is a desired maximum difference between two consecutive detection axes (10);
$\Delta\theta$ is the largest angle between two consecutive detection axes (10).

9. Computer program product comprising program code instructions which, when executed by a computer, implement the detection method according to any one of claims 1 to 8.

10. Device (8) for detecting an obstacle configured in such a way as to, for at least one telemeter (4) having a plurality of detection axes (10), from a current position of the telemeter (4), an uncertainty model on the position of the telemeter (4) and a detection signal delivered by the telemeter (4), the detection signal being indicative of the position, along each detection axis (10), of a detection horizon (9) corresponding to said detection axis (10):

   - calculate, for each point of a space around the telemeter (4), from the current position of the telemeter (4), the uncertainty model on the position of the telemeter (4) and the detection signal, a plurality of corresponding intermediate probabilities of presence, each intermediate probability of presence being associated with a respective orientation ($\beta$) of the telemeter (4) among a plurality of predetermined orientations around a current orientation of the telemeter, each orientation being considered free of errors;
   - for each point of space, calculate a probability of the presence of an obstacle from each corresponding intermediate probability of presence and from an uncertainty model on the orientation of the telemeter (4);
   - generate an alert if the probability of the presence of an obstacle in a predetermined zone with respect to the telemeter (4) is greater than or equal to a predetermined alert threshold.

11. System (2) for detecting an obstacle comprising a device (8) for detecting an obstacle according to claim 10, a telemeter (4) and a navigation device (6),

   the telemeter (4) being associated with a plurality of detection axes (10) and being configured to deliver a detection signal indicative of the position, along each detection axis (10), of a detection horizon (9) corresponding to said detection axis (10),
   the navigation device (6) being configured to determine the current position and the current orientation of the telemeter (4),
   the detection device (8) being connected to the telemeter (4) to receive the detection signal and to the navigation device (6) to receive the current position and the current orientation of the telemeter (4).

12. Vehicle (20) embedding a system (2) for detecting an obstacle according to claim 11, the detection axes (10) of the telemeter (4) being directed towards the outside of the vehicle (20).

FIG. 1

FIG. 2

FIG. 3

FIG. 4

FIG. 5

FIG. 6